# EUROPEAN PATENT SPECIFICATION

(11) **EP 0 723 377 B1**
(45) Date of publication and mention of the grant of the patent: **07.09.2005**
(21) Application number: 96300373.6
(22) Date of filing: 18.01.1996
(51) Int. Cl.: H04N 9/804

(54) **Recording/reproducing method of digital video tape for trick-play operation and recorder/reproducer suitable therefor**
Digitales Videobandaufnahme-/-wiedergabeverfahren für Trickabspielbetrieb und dafür geeignete Aufnahme-/Wiedergabeanlage
Procédé d'enregistrement/de réproduction de bande vidéo numérique pour opération de lecture extraordinaire et dispositif d'enregistrement/de reproduction adapté à cet effet

(30) Priority: 23.01.1995 KR 9501073
(43) Date of publication of application: 24.07.1996
(60) Divisional application: 04002269.1
(73) Proprietor: SAMSUNG ELECTRONICS CO., LTD., Kyungki-do 441-370 (KR)
(72) Inventor: Kim, Tae-eung, Suwon-city, Kyungki-do (KR)
(74) Representative: Robinson, Ian Michael

(56) References cited:
- EP-A- 0 606 857
- EP-A- 0 625 850
- EP-A- 0 627 855
- EP-A- 0 629 087
- EP-A- 0 644 691
- EP-A- 0 650 296
- EP-A- 0 673 158
- EP-A- 0 690 619
- EP-A- 0 700 219
- EP-A- 0 712 247
- EP-A- 0 712 255
- EP-A- 0 720 364
- US-A- 5 301 070

## Description

The present invention relates to a recording method of a digital video tape and a recorder suitable for the method, and more particularly, to a method for recording video data for trick-play operation and a recorder suitable for the method.

A high definition television (HDTV) has a vertical and horizontal resolution twice that of standard televisions and has fewer problems with a cross color phenomenon. HDTVs have CD-like sound quality and display images with an aspect ratio of 9:16, which is wider than the standard 3:4 aspect ratio.

The digital video tape recorder is suitable for recording the HDTV signal due to the wide bandwidth and high signal-to-noise ratio, compared with the analog video tape recorder. However, the bandwidth of the digital video tape recorder in the current technical range is only 25MHz, so that information of the HDTV having 1.2GHz bandwidth should be compressed to below 1/50. It has been known that the compression method according to the MPEG-2 is suitable for this purpose.

As a tape recording format, the usage of SD-VCR recording format has been standardized. However, the method to arrange the data for such trick-play operation as high speed playback, still picture reproduction and slow motion playback has not yet been standardized.

As a conventional trick play method, the trick-play data can be arranged on the trace scanned by a head in correspondence to each multiple speed. In this case, the screen quality reproduced during trick-play operation is excellent, but precise servo control (including speed locking, phase locking and track selection) is required for exactly scanning the trace on which the trick-play data is arranged, resulting in a complicated hardware design.

Another conventional method is to repeatedly record the trick-play data as many times as the number of the multiple, in the corresponding number of adjacent tracks. According to this method, since the head scans only one track among the multiple adjacent tracks, only speed lock servo control is required, so that hardware design costs are reduced. However, the recording region is excessively consumed by the repeated recording, and the "freeze" time for one screen is lengthened for lower multiple speeds, to thereby cause eye fatigue.

EP-A-0,627,855 published 7 December 1994 is an example of such a conventional method and apparatus for digital video signal recording. Variable speed reproduction data composed of high priority (HP) data containing an in-frame encoded frame (I frame) is redundantly recorded in a surplus record area that is formed by the difference between the transmission rate of an advanced television (ATV) signal and the transmission rate of the compressed digital video signal. In one embodiment, this prior art document discloses recording one or two high priority packet data sets to 2n (where n is a magnification of variable speed reproduction) tracks with a first azimuth angle, and recording another high priority packet data set to 2n tracks with a second azimuth angle.

EP-A-0,606,857 (Hitachi) discloses a digital video tape recorder which selects data useful for generating images during trick play operation and records the data in trick play tape segments arranged to form fast scan tracks and multiple-speed playback tracks. The trick play tape segment is in a consistent position across a plurality of track pairs, but the recorded trick play data varies from track to track.

EP-A-0,690,616 (Samsung Electronics) is cited under Article 54(3) EPC and discloses a digital video tape recording/reproducing method for trick play, where trick play data is recorded in an unused area. That is, an audio sector is not used in recording an advanced television (ATV) signal on to digital video tape formatted for standard-definition VCR (SD-VCR). Trick play data for low speed is recorded on the unused audio sector.

EP-A-0,712,255 (Samsung Electronics) discloses a digital video tape recording method for trick play similar to EP-A-690,616 discussed above.

With a view to solving or reducing the above problems, it is an aim of preferred embodiments of the present invention to provide a digital video tape recording method for trick-play operation, in which screen quality is not deteriorated at lower multiple speeds and complex hardware requirements are not necessary.

It is another aim of preferred embodiments of the present invention to provide a recorder suitable for the above recording method.

According to the present invention there is provided a digital video tape recording method as set forth in claim 1 appended hereto. Preferred features of the present invention will be apparent from the dependent claims and the description which follows.

According to the recording method of the present invention, N multiple speed trick-play data is recorded in a pair of adjacent tracks, and the same trick-play data is repeatedly recorded in N adjacent track pairs, so that phase locking and a track selection are not required, thereby reducing hardware cost.

Also according to the present invention there is provided a digital video tape recorder as set forth in claim 8 appended hereto. Preferred features of the present invention are again set forth in the dependent claims or will be apparent from the description which follows.

For a better understanding of the invention, and to show how embodiments of the same may be carried into effect, reference will now be made, by way of example, to the accompanying diagrammatic drawings, in which:
Figure 1 is a diagram showing the track structure of a conventional SD-VCR;
Figure 2 is a diagram showing the arrangement of video data sync blocks recorded according to the recording method of an embodiment of the present invention;
Figures 3A and 3B are diagrams showing an azimuth relation between the track and head forward-scanning at 5× speed, in a digital video tape recorder having an opposing-type head and in one having a pair-type head, respectively;
Figures 4A and 4B are diagrams showing an azimuth relation between the track and head forward-scanning at 4× speed, in a digital video tape recorder having an opposing-type head and in one having a pair-type head, respectively;
Figure 5 is a block diagram showing a digital video tape recorder according to embodiments of the present invention;
Figure 6 is a diagram showing the layer structure of the MPEG-2 video stream;
Figure 7 is a diagram showing an example of the MPEG-2 picture group;
Figure 8 is a diagram showing the frequency coefficients generated as the result of a discrete cosine transform (DCT) function in a matrix type; and
Figure 9 is a block diagram showing a digital video tape reproducer according to embodiments of the present invention.

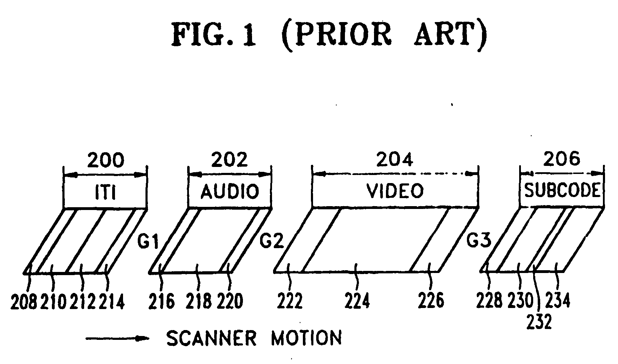

In Figure 1, the track is classified into an insert and track information (ITI) sector 200, an audio sector 202, a video sector 204 and a subcode sector 206, in sequence from the scanning starting point of the head. Also, there are gaps G1, G2 and G3 between each sector. ITI sector 200 includes an ITI pre-amble region 208, a start-sync block region 210, a track information region 212 and an ITI post-amble region 214. Audio sector 202 includes an audio pre-amble region 216, an audio data sync block 218 and an audio post-amble region 220. Video sector 204 includes a video pre-amble region 222, a video data sync block 224 and a video post-amble region 226. Subcode sector 206 includes a subcode pre-amble region 228, a subcode region 230, a subcode post-amble region 232 and an overwrite margin 234.

There are three types of digital video tape recorders for use in the European system, which are classified according to bit rate; that is, 25Mbps mode, 12.5Mbps mode and 6.25Mbps mode. The SD-VCR can be used for all three modes since it has a maximum bit rate of 25Mbps. The other modes can be accommodated by proper control (i.e., one half or one fourth reduction, as necessary) of the speed of the SD-VCR's drum.

However, as shown in Table 1, the bit amount used in each mode and the real bit amount applied by the SD-VCR are different, and the trick-play data can be recorded in the video sector using the difference.

**Table 1**

| mode | real bit rate | remaining sync blocks |
|---|---|---|
| 25Mbps | 19.3Mbps | 30 |
| 12.5Mbps | 9.6Mbps | 31 |
| 6.25Mbps | 4.8Mbps | 31 |

As shown in Table 1, since the 25Mbps mode bit rate for the SD-VCR is 25Mbps and that for the digital video tape is 19.3Mbps, there are 30 remaining sync blocks which can be used for the trick-play data. Likewise, there are 31 remaining sync blocks which can be used for the trick-play data in the 12.5Mbps and 6.25Mbps modes. However, since part of the sync blocks occupied by the normal-play video data can be used for the trick-play data, the real number of sync blocks assigned for trick-play operation may be increased.

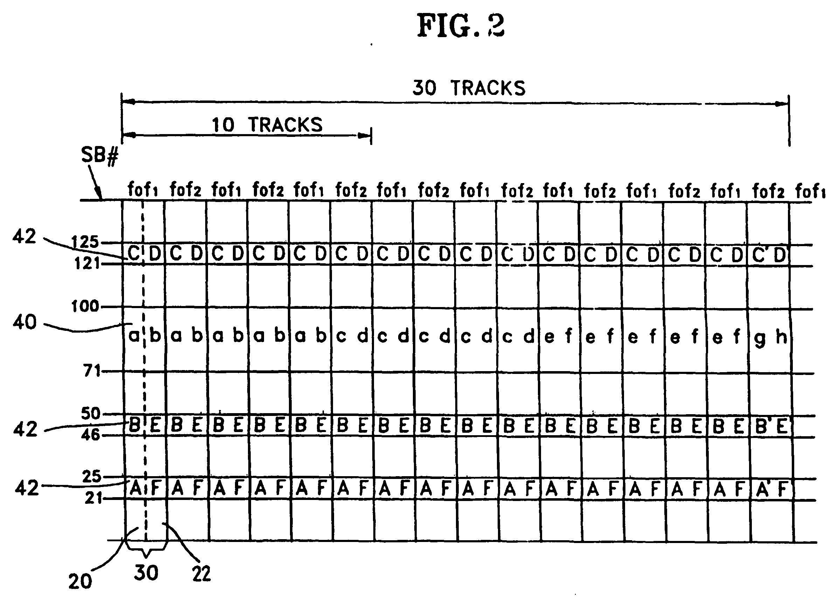

Figure 2 is a diagram showing the arrangement of video data sync blocks recorded according to the recording method of embodiments of the present invention. In Figure 2, the tape travels in the horizontal direction and the head scans the tape in the longitudinal direction. Here, a sync block number (SB#) is assigned to the sync blocks along the head scanning direction, such that head scanning is started from the bottom of Figure 2, at sync block 1, with the SB numbers increasing upward along the head scanning direction.

The track having a negative azimuth angle has an f₀ frequency characteristic and the track having a positive azimuth angle has an f₁ or f₂ frequency characteristic. The f₁ and f₂ frequency characteristics are alternately recorded in a track having the positive azimuth angle. Here, f₀, f₁ and f₂ are frequencies selected for performing tracking.

According to the recording method of embodiments of the present invention, the trick-play data is recorded in a first track pair 30 including a first track 20 and a second track 22 adjacent to first track 20 in the tape travelling direction. Also, the trick-play data recorded in first track pair 30 is repeatedly recorded in track pairs adjacent to first track pair 30. Here, the number of track pairs in which the data is recorded corresponds to the multiple of the playback speed for the trick-play data. Thus, the number of the multiple must be an integer since the number of track pairs is an integer.

In addition, since the trick-play data is recorded in a track pair consisting of two successive tracks, the multiple of the speed should be an odd integer, in order to control the head scanning phase during the trick-play operation.

The first multiple speed trick-play data is recorded in a first area 40 located in the middle of first track pair 30. First area 40 is experimentally selected as area which is commonly scanned by the opposing-type two heads disposed opposite each other and the pair-type two heads, when the heads scan at the multiple speed corresponding to the trick-play data. Here, in the selected area, the tapewidth scanned by the head should be more than 75% of the tapewidth of each track.

Each track has a second area 42 on which the second multiple speed trick-play data is recorded. Here, the second multiple speed is faster than the first multiple speed.

In the first area 40, the trick-play data of 5× speed are recorded in 30 sync blocks corresponding to the 71st to 100th sync blocks. In the second area 42, the trick-play data of 15× speed are recorded in fifteen sync blocks corresponding to the 21st to 25th, the 46th to 50th, and the 121st to 125th sync blocks. The location of first and second areas 40 and 42 is the same in the first and second tracks 20 and 22.

According to the recording method of embodiments of the present invention, N-times speed trick-play data is recorded in the track pair consisting of two adjacent tracks, and the same trick-play data as that recorded in the first track pair is repeatedly recorded in N adjacent track pairs, so that neither phase locking nor track selection are required, to thereby reduce hardware costs.

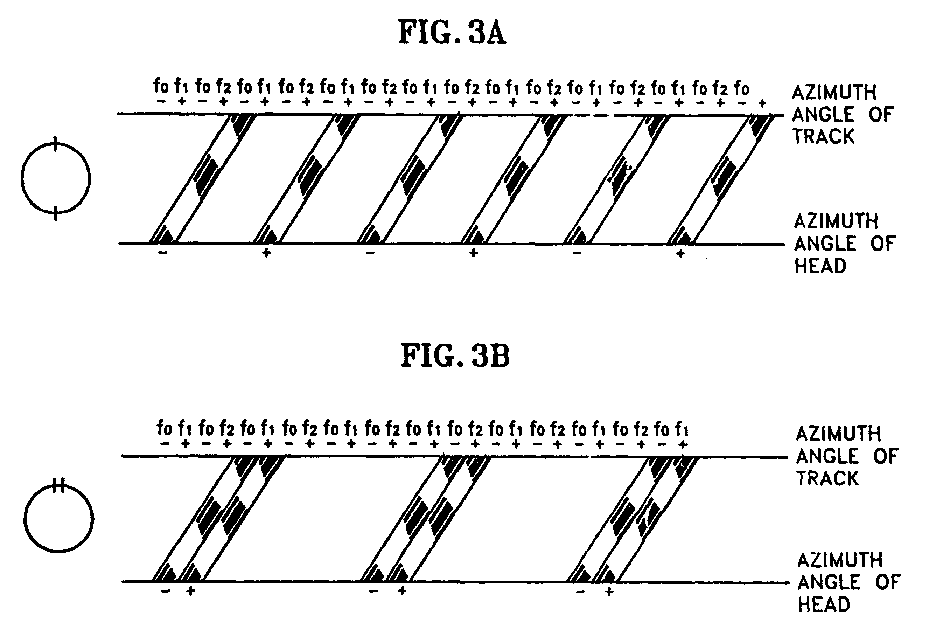

Figure 3A is a diagram showing an azimuth relation between the track and head, and the reproduced region when the head scans at 5× speed in a forward direction while the azimuth angles of track and head are in accord with each other, in a digital video tape recorder having the opposing-type head. As shown in Figure 3A, in the case where the azimuth angles of the track and head are in accord with each other, that is, are phase-locked, a leading end, a center, and a trailing end of the track are read out during the head scanning. Here, it is shown that the portions read out by the heads, each having positive and negative azimuth angles, are in accord with each other.

Figure 3B is a diagram showing an azimuth relation between the track and head, and the reproduced region when the head scans at 5× speed in a forward direction while the azimuth angles of the track and head are in accord with each other in a digital video tape recorder having the pair-type head. As shown in Figure 3B, in the case where the azimuth angles of the track and head are in accord with each other, that is, in a phase-locked state, a leading end, a center, and a trailing end of the track are read out during the head scanning. Here, it is shown that the portions read out by the heads, each having positive and negative azimuth angles, are in accord with each other.

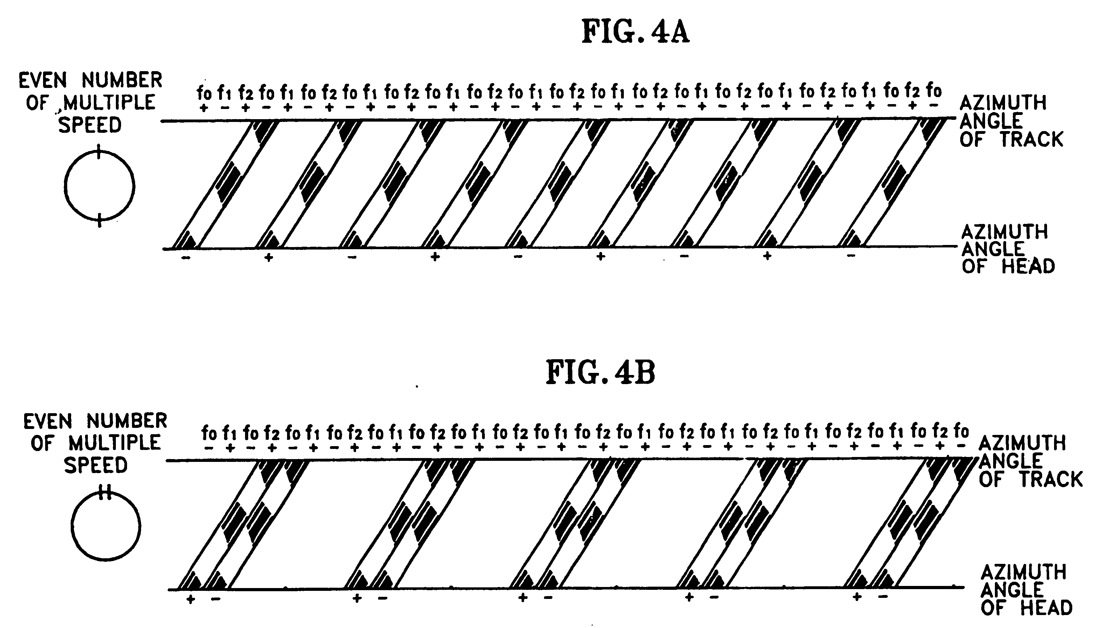

Figure 4A is a diagram showing an azimuth relation between the track and head, and the reproduced region when the head scans at 4× speed in a forward direction while the azimuth angles of the track and head are in accord with each other, in the digital video tape recorder having the opposing-type head. As shown in Figure 4A, in the case where the azimuth angles of the track and head are in accord with each other, that is, in a phase-locked state, the portions read out by the heads each having positive or negative azimuth angle during the head scanning are not always in accord with each other.

Figure 4B is a diagram showing an azimuth relation between the track and head, and the reproduced region when the head scans at 4× speed in a forward direction while the azimuth angles of the track and head are in accord with each other, in the digital video tape recorder having the pair-type head. As shown in Figure 4B, in the case where the azimuth angles of the track and head are in accord with each other, that is, in a phase-locked state, the portions read out by the heads each having positive or negative azimuth angle during the head scanning are in accord with each other.

As shown in Figures 3A and 4A, in a digital video tape recorder having an opposing-type head, the portions reproduced by the heads each having positive or negative azimuth angle are accord with each other for odd multiple speeds, but are not in accord with each other for even multiple speeds.

According to embodiments of the present invention, the odd multiples of speed for trick-play operation are adopted for providing the compatibility between the digital video tape recorders having the pair-type heads and opposing-type heads.

The trick-play data is composed of AC components and a DC component of DCT coefficients generated as a result of the DCT function. As the multiple of the trick-play speed increases, the number of AC components decreases accordingly. Since the number of AC components with respect to each multiple speed are selected according to design and/or the number of usable sync blocks, the detail description thereof will be omitted.

If the speed of the drum and tape is respectively reduced as much as a half in the 25Mbps mode, SD-VCR can be corresponded to 12.5Mbps, and if reduced as much as one fourth, SD-VCR can be corresponded to 6.25Mbps.

On the contrary, if the speed of the drum and tape is respectively increased twice at 6.25Mbps mode, SD-VCR can be corresponded to 12.5Mbps mode, which corresponds to 2× speed playback at 6.25Mbps mode. If the speed of the drum and tape is respectively increased 4× at 6.25Mbps mode, SD-VCR can be corresponded to 25Mbps mode, which corresponds 4× speed playback at 6.25Mbps mode.

Also, the speed of the drum and tape is respectively increased twice at 12.5Mbps mode, SD-VCR can be corresponded to 25Mbps mode, which corresponds to 2× speed playback at 12.5Mbps mode.

If the tape travelling speed increases 2N-times, the head scanning speed doubles and the signal reproduced by the head is demodulated according to an N/2-times speed trick-play mode of a mode with an N-times bit rate, the effect of 2N-times speed trick-play operation can be actually obtained. That is, if 5× speed trick-play data is recorded on the tape in which data is recorded at 6.25Mbps bit rate, the effect of 10× speed trick-play operation can be obtained by reproducing the tape at 12.5Mbps. Here, if 15× speed trick-play data is recorded, the effect of 30× speed trick-play operation can be obtained.

Also, if 5× speed trick-play data is recorded on the tape in which the data is recorded at 6.25Mbps bit rate, the effect of 20× speed trick-play operation is achieved by reproducing the tape at 25Mbps. Here, if 15× speed trick-play data is recorded, the effect of 60× speed trick-play operation can be obtained.

If 5× speed trick-play data is recorded on the tape in which the data is recorded at 12.5Mbps bit rate, the effect of 10× speed trick-play operation is achieved by reproducing the tape at 25Mbps. Here, if 15× speed trick-play data is recorded, the effect of 30× speed trick-play operation can be obtained.

Table 2 shows examples of trick play operation, according to the bit rate mode and the multiple of the trick-play speed.

**Table 2**

| recorded data type | performable multiple speed | | |
|---|---|---|---|
| | 6.25Mbps mode | 12.5Mbps mode | 25Mbps mode |
| normal | • 2× speed: drum × 2 tape × 2 (corresponding to normal play at 12.5Mbps) | • 2× speed: drum × 2 tape × 2 (corresponding to normal play at 25Mbps) | |
| | • 4× speed: drum × 4 tape × 4 (corresponding to normal play at 25Mbps) | | |
| 5× | • 5 × speed | • 5 × speed | • 5× |
| | • 10× speed: drum × 2 tape × 5 × 2 (corresponding to 5× speed at 12.5Mbps) | • 10× speed: drum × 2 tape × 5 × 2 (corresponding to 5× speed at 25Mbps) | speed |
| | • 20× speed: drum × 4 tape × 5 × 4 (corresponding to 5× speed at 25Mbps) | | |
| 15× | • 15× speed | • 15× speed | • 15× |
| | • 30X speed: drum × 2 tape × 15 × 2 (corresponding to 15× speed at 12.5Mbps) | • 30× speed: drum × 2 tape × 15 × 2 (corresponding to 15× speed at 25Mbps) | speed |
| | • 60× speed: drum × 4 tape × 15 × 4 (corresponding to 15× speed at 25Mbps) | | |

According to a preferred reproducing method, trick-play operation providing a good quality picture can be easily performed by reproducing information recorded with the lower bit rate mode using the higher bit rate mode.

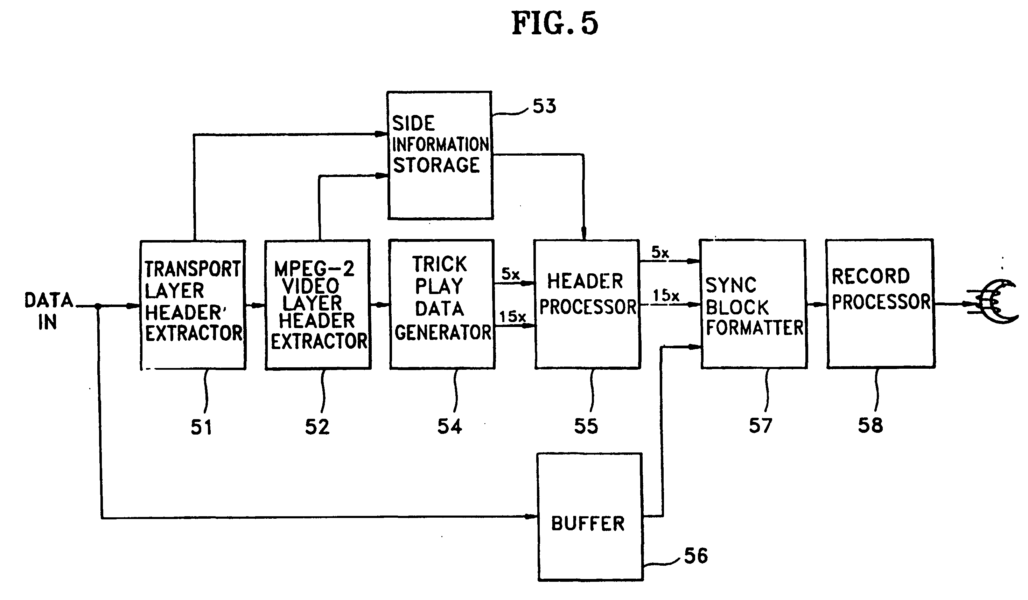

Figure 5 is a block diagram showing a digital video tape recorder according to an embodiment of the present invention. The digital video tape recorder shown in Figure 5 comprises a transport layer header extractor 51, an MPEG-2 video layer header extractor 52, a side information storage 53, a trick-play data generator 54, a header processor 55, a buffer 56, a sync block formatter 57, and a record processor 58.

Transport layer header extractor 51 receives the DVB data of an MPEG-2 transport stream, divides the DVB data into a transport layer header and an MPEG-2 video stream and outputs the result.

MPEG-2 video layer header extractor 52 receives the MPEG-2 video stream output from transport layer header extractor 51, divides the input into the required MPEG-2 video layer header and MPEG-2 video sequence, and outputs the result.

Side information storage 53 buffers the transport layer header output from transport layer header extractor 52 and the MPEG-2 video layer header output from MPEG-2 video layer header extractor 52, and outputs the result.

Trick-play data generator 54 receives the MPEG-2 video sequence output from MPEG-2 video layer header extractor 52, and generates the trick-play data.

Header processor 55 appends information of the transport layer header and the MPEG-2 video layer header to the trick-play data generated from trick-play data generator 54, with reference to the transport layer header and MPEG-2 video layer header stored in side information storage 53.

Buffer 56 buffers the DVB data of the MPEG-2 transport stream, and outputs the result.

Sync block formatter 57 reformats the trick-play data to which the header information output from header processor 55 is appended, and the MPEG-2 video stream output from buffer 56, into sync blocks suitable for the SD-VCR.

Record processor 58 performs channel-coding with respect to the data with the sync block arrangement output from sync block formatter 57 and records the result on the tape.

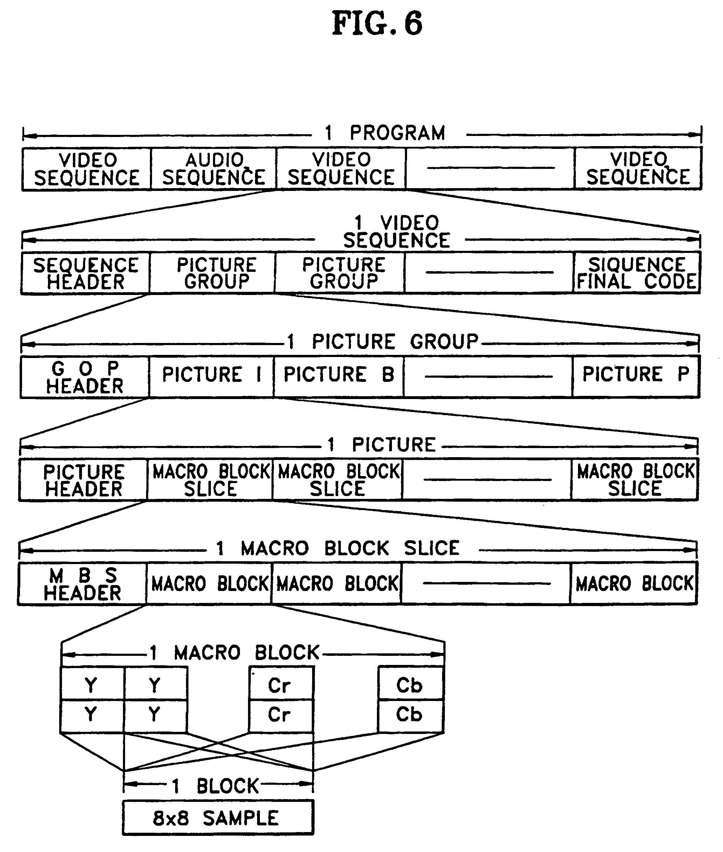

The digital video tape recorder receives the picture data of the MPEG-2 transport stream. Figure 6 is a diagram showing the layer structure of the MPEG-2 video stream. As shown in Figure 6, a program is defined as the assembly of interleaved video sequences and audio sequences. The video sequence is composed of one or more picture groups and a picture group is composed of one or more pictures. Here, each picture is composed of one or more macroblock slices each of which is composed of one or more macroblocks. The macro block comprises one luminance signal block and two color difference signal blocks in accordance with the construction of a color signal. Here, each block is an 8×8-sized DCT block.

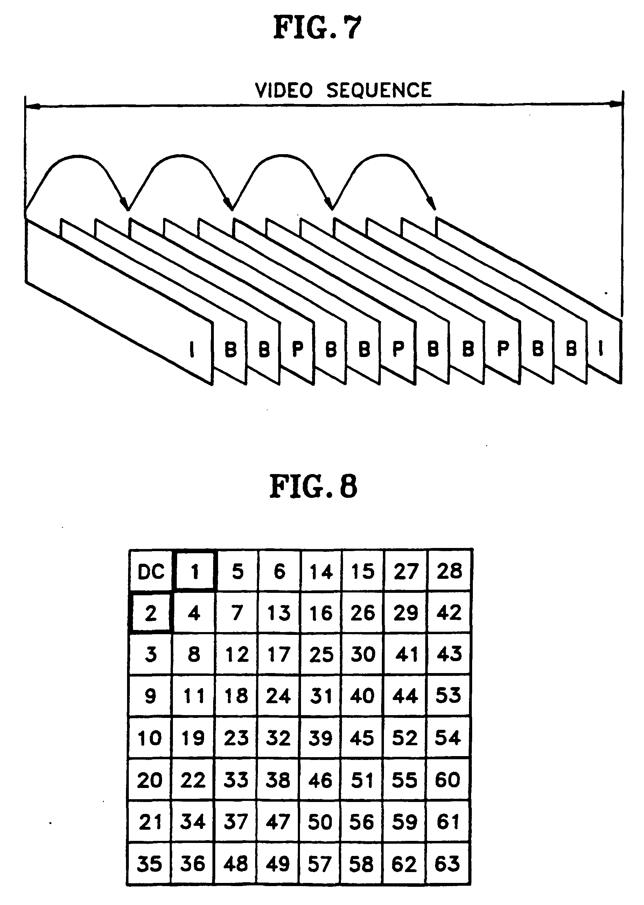

Figure 7 is a diagram showing an example of the picture group. A reference frame is inserted into the MPEG-2 picture group so as to restore the picture within an arbitrary location. This reference frame is called an intra-picture which is encoded by intra-coding which is similar with Joint Picture Engineering Group's (JPEG) method. A plurality of forward-predicted pictures and bi-directionally predicted pictures are placed between adjacent intra-pictures. Here, the forward-predicted picture is generated from the intra-picture using information such as a motion vector. Differently from the forward-predicted picture, the bi-directionally predicted picture is generated from the previous forward predicted picture, the next forward predicted picture or both using interpolation. Here, the interpolation is not performed directly but is performed after motion vector is searched and compensated. Also, interpolation is not always performed but a method having the least error is applied for the interpolation after interpolation by block, forward and backward predictions, and the bidirectional prediction.

Trick-play data generator 54 generates trick-play data using the data of the intra-picture.

Figure 8 is a diagram showing the frequency coefficients generated as the result of the DCT function in a matrix type. In Figure 8, a DC coefficient is at the left higher and the remaining coefficients are AC coefficients. As the result of the DCT function, the picture signal of the time domain is converted into the picture signal of the frequency domain. The DCT has a characteristic in that the energy is concentrated on the lower frequency domain by the transform. The trick-play data consists of AC and DC components. As the number of AC coefficient increases, the quality of the reproduced picture is improved. Generally, the number of AC coefficients is determined by the multiple speed number of the trick-play data.

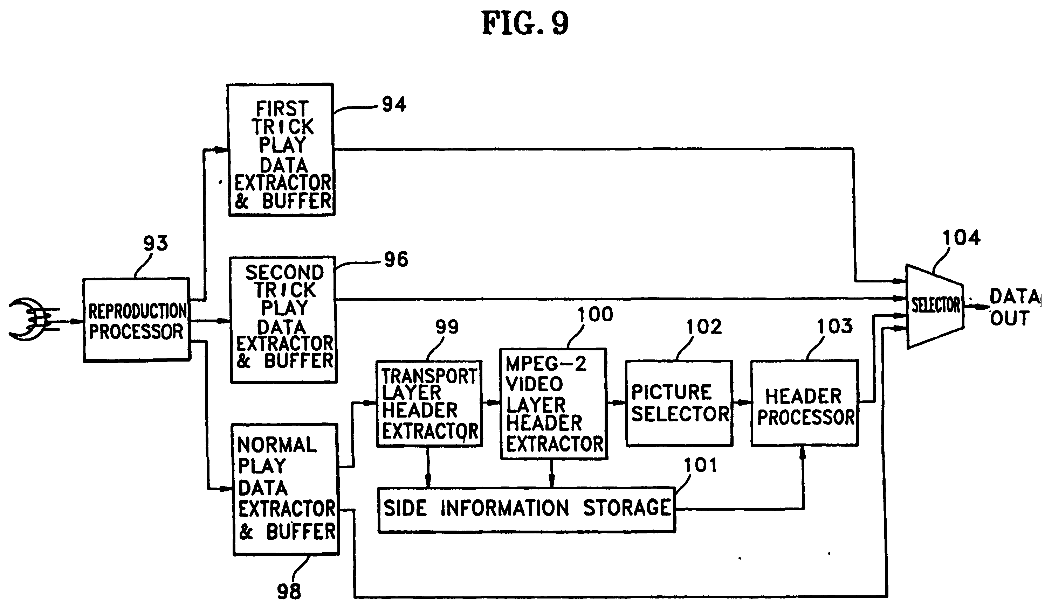

Figure 9 is a block diagram showing a preferred digital video tape reproducer. The digital video tape reproducer shown in Figure 9 comprises a reproduction processor 93, a first multiple speed trick-play data extractor and buffer 94, a second multiple speed trick-play data extractor and buffer 96, a normal-play data extractor and buffer 98, a transport layer header extractor 99, an MPEG-2 video layer header extractor 100, a side information storage 101, a picture selector 102, a header processor 103, and a selector 104.

Reproduction processor 93 reproduces the normal-play data and trick-play data from the DVB data of the MPEG-2 transport stream recorded on the tape, according to the reproducing mode. Here, an equalizer for each mode can be included.

First multiple speed trick-play data extractor and buffer 94 extracts the first multiple speed trick-play data from the data stream output from reproduction processor 93, buffers the extracted data and outputs the result.

Second multiple speed trick-play data extractor and buffer 96 extracts the second multiple speed trick-play data from the data stream output from reproduction processor 93, buffers the extracted data and outputs the result.

Normal-play data extractor and buffer 98 extracts the normal-play data from the data stream output from reproduction processor 93, buffers the extracted data and outputs the result.

Transport layer header extractor 99 receives the DVB data of the MPEG-2 transport stream output from normal-play data extractor and buffer 98, divides the received DVB data into a transport layer header and an MPEG-2 video stream, and outputs the result.

MPEG-2 video layer header extractor 100 receives the MPEG-2 video stream output from transport layer header extractor 99, divides the received MPEG-2 video stream into a required MPEG-2 video layer header and an MPEG-2 video sequence, and outputs the result.

Side information storage 101 buffers the transport layer header output from transport layer header extractor 99 and the MPEG-2 video layer header output from the MPEG-2 video layer header extractor 100, and outputs the result.

Picture selector 102 receives the MPEG-2 video sequence output from MPEG-2 video layer header extractor 100, and extracts and outputs the intra-picture data. As necessary, the forward-predicted picture or the bi-directionally predicted picture can be selected.

Header processor 103 appends the transport layer header information and the required MPEG-2 video layer header information to the intra-picture data output from picture selector 102 with reference to the transport layer header and MPEG-2 video layer header stored in side information storage 101 and outputs the result.

Selector 104 selectively outputs the data output from first multiple speed trick-play data extractor and buffer 94, second multiple speed trick-play data extractor and buffer 96, and normal-play data extractor and buffer 98.

The operation of the digital video tape reproducer shown in Figure 9 will be described in detail. A capstan motor and drum motor (not shown) rotate at a predetermined speed prescribed according to the reproducing mode. Here, the rotary speed of the drum may be fixed at 9000 rpm. Head 107 reproduces the signal recorded on the tape and then provides the reproduced signal to reproduction processor 93.

The reproduced signal output from reproduction processor 93 is provided to first multiple speed trick-play data extractor and buffer 94, second multiple speed trick-play data extractor and buffer 96, and normal-play data extractor and buffer 98.

First multiple speed trick-play data extractor and buffer 94 operates in the 5× speed trick-play mode and extracts the 5× speed trick-play data from the trick-play data recorded by the recorder of Figure 5, and buffers and outputs the result. The 5× speed trick-play data output from first multiple speed trick-play data extractor and buffer 94 is provided to a first input of selector 104.

Second multiple speed trick-play data extractor and buffer 96 operates in the 15× speed trick-play mode and extracts the 15× speed trick-play data from the trick-play data recorded by the recorder of Figure 5, and buffers and outputs the result. The 15× speed trick-play data output from second multiple speed trick-play data extractor and buffer 96 is provided to a second input of selector 104.

Normal-play data extractor and buffer 98 operates in the normal-play mode, extracts the normal-play data recorded by recorder of Figure 5, and buffers and outputs the result. The normal-play data output from normal-play data extractor and buffer 98 is provided to transport layer header extractor 99 and a fourth input of selector 104.

Transport layer header extractor 99, MPEG-2 video layer header extractor 100, side information storage 101, picture selector 102 and header processor 103 are provided for extracting the required picture information from the MPEG-2 video stream when the trick-play data recorded with the lower bit rate mode are trick-played with the higher bit rate mode.

The MPEG-2 video sequence as shown in Figures 6 and 7 is extracted from the MPEG-2 transport stream reproduced by head 107, via transport layer header extractor 99 and MPEG-2 video layer header extractor 100.

Picture selector 102 extracts the intra-picture data from the MPEG-2 video sequence extracted from MPEG-2 video layer header extractor 100 and provides the result to header processor 103. Since one or more intra-pictures as an independently decodable picture are included in each picture group, only the intra-picture can be extracted from the MPEG-2 video stream so as to construct the reproduced picture (a partitioned operating mode).

Header processor 103 receives the data of the extracted intra-picture, appends header information to the input data with reference to the transport layer header information and the MPEG-2 video layer header information stored in side information storage 101, and provides the result to a third input of selector 104.

Selector 104 selectively outputs one of the data input via first to fourth inputs according to the reproducing mode.

As described above, according to the recording method, N-times speed trick-play data is recorded in a track pair consisting of two adjacent tracks, and the same trick-play data is repeatedly recorded in the N adjacent track pairs, so that phase locking and a track selection are not required, to thereby reduce the cost of the hardware.

According to the reproducing method the information recorded with the lower bit rate mode is reproduced with the higher bit rate mode, so that trick-play operation having a good picture quality can be easily performed.

Although a few preferred embodiments have been shown and described, it will be appreciated by those skilled in the art that various changes and modifications might be made without departing from the scope of the invention, as defined in the appended claims.

## Claims

1. A digital video tape recording method for recording trick-play data generated from a DVB picture data in an SD-VCR video track together with normal-play data, comprising the steps of:
recording the trick-play data interspersed in separated regions (40,42) within a video region (sync blocks 21-155), in which video region data for normal speed playback are recorded, of each track of a first track pair (30), a track pair including a first track having a first azimuth angle and a second track having a second azimuth angle and being adjacent to said first track; and
recording the same trick play data as that recorded in said first track pair (30) in a number N of track pairs placed in succession, N being a multiple speed number of the trick-play data in respect of said normal playback speed, with the same pattern, such that the locations in which trick play data (a,b; A,F, B,E, C,D) are recorded are the same in each track of said N track pairs, and such that the same trick-play data are recorded at corresponding locations in each of said N track pairs;
wherein first trick-play data corresponding to a first multiple speed and second trick-play data corresponding to a second multiple speed are recorded in first (40) and second (42) ones of said separated regions, respectively, within each track of said N track pairs.

2. The recording method of claim 1, wherein said first multiple speed and said second multiple speed are 5× and 15× speeds, respectively.

3. The recording method of claim 2, wherein said trick-play data corresponding to 5× speed is recorded in a middle area (40) of the video region of each track pair (30).

4. The recording method of claim 3, wherein said trick-play data corresponding to 5× speed is recorded in the 71st to 100th sync blocks along the head travelling direction during normal playback.

5. The recording method of claim 3 or 4, wherein said trick-play data corresponding to 15× speed is recorded in three other separated regions (42) excluding the middle area (40) of the video region of each track pair (30).

6. The recording method of claim 5, wherein said trick-play data corresponding to 15× speed has two regions (42) located in the central lower portion and one region (42) located in the central higher portion, from the starting position of head scanning, during normal playback.

7. The recording method of claim 6, wherein said trick-play data corresponding to 15× speed is recorded in the 21st to 25th, the 46th to 50th and the 121st to 125th sync blocks (42) along the head scanning direction during normal playback.

8. A digital video tape recorder for recording DVB data of an MPEG-2 transport stream, comprising:
a buffer (56) for buffering the DVB data of the MPEG-2 transport stream and outputting the result;
a transport layer header extractor (51) for receiving the DVB data, dividing the received DVB data into a transport layer header and an MPEG-2 video stream, and outputting the result;
an MPEG-2 video layer header extractor (52) for receiving the MPEG-2 video stream output from said transport layer header extractor (51), dividing the input into an MPEG-2 video layer header and an MPEG-2 video sequence, and outputting the result;
side information storage means (53) for buffering the transport layer header output from said transport layer header extractor (51) and the MPEG-2 video layer header output from said MPEG-2 video layer header extractor (52), and outputting the result;
a trick-play data generator (54) for receiving the MPEG-2 video sequence output from said MPEG-2 video layer header extractor (52) and generating trick-play data;
a header processor (55) for appending information of the transport layer header and the MPEG-2 video layer header to the trick-play data generated from said trick-play data generator (54) with reference to the transport layer header and MPEG-2 video layer header stored in said side information storage means (53);
a sync block formatter (57) for reformatting the trick-play data to which the header information output from said header processor (55) is appended and the DVB data of the MPEG-2 transport stream output from said buffer (56) into sync blocks suitable for an SD-VCR; and
a record processor (58) for channel-coding the data with the sync block structure output from said sync block formatter (57) and recording the result:
wherein the trick-play data is generated and recorded such that:
the trick-play data is recorded interspersed in separated regions (40,42) within a video region (sync blocks 21-155), in which video region data for normal speed playback are recorded, of each track of a first track pair (30), a track pair including a first track having a first azimuth angle and a second track having a second azimuth angle and being adjacent to said first track; and
the same trick play data as that recorded in said first track pair (30) is recorded in a number N of track pairs placed in succession, N being a multiple speed number of the trick-play data in respect of said normal playback speed, with the same pattern, such that the locations in which trick play data (a,b; A,F, B,E, C,D) are recorded are the same in each track of said N track pairs, and such that the same trick-play data are recorded at corresponding locations in each of said N track pairs;
wherein first trick-play data corresponding to a first multiple speed and second trick-play data corresponding to a second multiple speed are recorded in first (40) and second (42) ones of said separated regions, respectively, within each track of said N track pairs.

9. The digital video tape recorder of claim 8, wherein said trick-play data generator (54) generates the trick-play data using intra-picture data of the MPEG-2 video sequence input to said trick-play data generator.

## Patentansprüche

1. Digitales Videoband-Aufzeichnungsverfahren zum Aufzeichnen von Trickwiedergabedaten, die aus DVB-Bilddaten in einer SD-VCR-Videospur zusammen mit Normalabspieldaten erzeugt werden, das die folgenden Schritte umfasst:
Aufzeichnen der Trickwiedergabedaten verteilt in getrennten Bereichen (40, 42) innerhalb eines Videobereichs (Sync-Blöcke 21-155) jeder Spur eines ersten Spur-Paars (30), wobei in dem Videobereich Daten für Wiedergabe mit normaler Geschwindigkeit aufgezeichnet werden, und ein Spur-Paar eine erste Spur mit einem ersten Azimuthwinkel sowie eine zweite Spur mit einem zweiten Azimuthwinkel, die an die erste Spur angrenzt, enthält; und
Aufzeichnen der gleichen Trickwiedergabedaten wie die in dem ersten Spur-Paar (30) aufgezeichneten in einer Anzahl N von Spur-Paaren, die aufeinanderfolgend angeordnet sind, wobei N eine Mehrfachgeschwindigkeitszahl der Trickwiedergabedaten in Bezug auf die normale Abspielgeschwindigkeit ist, und zwar mit dem gleichen Muster, so dass die Positionen, an denen Trickwiedergabedaten (a, b; A, F, B, E, C, D) aufgezeichnet werden, in jeder Spur der N Spur-Paare die gleichen sind, und so, dass die gleichen Trickwiedergabedaten an entsprechenden Positionen in jedem der N Spur-Paare aufgezeichnet werden:
wobei erste Trickwiedergabedaten, die einer ersten Mehrfachgeschwindigkeit entsprechen, und zweite Trickwiedergabedaten, die einer zweiten Mehrfachgeschwindigkeit entsprechen, in ersten (40) bzw. zweiten (42) der getrennten Bereiche in jeder Spur der N Spur-Paare aufgezeichnet werden.

2. Aufzeichnungsverfahren nach Anspruch 1, wobei die erste Mehrfachgeschwindigkeit und die zweite Mehrfachgeschwindigkeit 5-fache bzw. 15-fache Geschwindigkeit sind.

3. Aufzeichnungsverfahren nach Anspruch 2, wobei die Trickwiedergabedaten, die 5-facher Geschwindigkeit entsprechen, in einem mittleren Abschnitt (40) des Videobereiches jedes Spur-Paars (30) aufgezeichnet werden.

4. Aufzeichnungsverfahren nach Anspruch 3, wobei die Trickwiedergabedaten, die 5-facher Geschwindigkeit entsprechen, in dem 71. bis 100. Sync-Block entlang der Kopfbewegungsrichtung während normalen Abspielens aufgezeichnet werden.

5. Aufzeichnungsverfahren nach Anspruch 3 oder 4, wobei die Trickwiedergabedaten, die 15-facher Geschwindigkeit entsprechen, in drei anderen getrennten Bereichen (42) außer dem mittleren Abschnitt (40) des Videobereiches jedes Spur-Paars (30) aufgezeichnet werden.

6. Aufzeichnungsverfahren nach Anspruch 5, wobei die Trickwiedergabedaten, die 15-facher Geschwindigkeit entsprechen, zwei Bereiche (42), die sich, ausgehend von der Startposition des Kopf-Abtastens während normalen Abspielens, in dem mittleren unteren Teil befinden, und einen Bereich (42) aufweisen, der sich in dem mittleren oberen Teil befindet.

7. Aufzeichnungsverfahren nach Anspruch 6, wobei die Trickwiedergabedaten, die 15-facher Geschwindigkeit entsprechen, in dem 21. bis 25., dem 46. bis 50. sowie dem 121. bis 125. Sync-Block (42) entlang der Kopf-Abtastrichtung während normalen Abspielens aufgezeichnet werden.

8. Digitaler Videorekorder zum Aufzeichnen von DVB-Daten eines MPEG-2-Transportstroms, der umfasst:
einen Puffer (56), der die DVB-Daten des MPEG-2-Transportstroms puffert und das Ergebnis ausgibt:
eine Einrichtung (51) zum Extrahieren des Headers einer Transportschicht, die die DVB-Daten empfängt, die empfangenen DVB-Daten in einen Header der Transportschicht und einen MPEG-2-Videostrom aufteilt und das Ergebnis ausgibt;
eine Einrichtung (52) zum Extrahieren eines Headers der MPEG-2-Videoschicht, die den MPEG-2-Videostrom empfängt, der von der Einrichtung (51) zum Extrahieren des Headers der Transportschicht ausgegeben wird, den Eingang in einen Header der MPEG-2-Videoschicht und eine MPEG-2-Videosequenz aufteilt und das Ergebnis ausgibt;
eine Nebeninformations-Speichereinrichtung (53), die den von der Einrichtung (51) zum Extrahieren des Headers der Transportschicht ausgegebenen Header der Transportschicht und den von der Einrichtung (52) zum Extrahieren des Headers der MPEG-2-Videoschicht ausgegebenen Header der MPEG-2-Videoschicht puffert und das Ergebnis ausgibt;
eine Einrichtung (54) zum Erzeugen von Trickwiedergabedaten, die die von der Einrichtung (52) zum Extrahieren des Headers der MPEG-Videoschicht ausgegebene MPEG-2-Videosequenz empfängt und Trickwiedergabedaten erzeugt;
eine Header-Verarbeitungseinrichtung (55), die Informationen des Headers der Transportschicht und des Headers der MPEG-2-Videoschicht an die von der Einrichtung (54) zum Erzeugen der Trickwiedergabedaten erzeugten Trickwiedergabedaten bezüglich des Headers der Transportschicht und des Headers der MPEG-2-Videoschicht anhängt, die in der Nebeninformations-Speichereinrichtung (53) gespeichert sind;
eine Einrichtung (57) zum Formatieren des Sync-Blocks, die die Trickwiedergabedaten, an die die von der Header-Verarbeitungseinrichtung (55) ausgegebenen Header-Informationen angehängt sind, und die von dem Puffer (56) ausgegebenen DVB-Daten des MPEG-2-Transportstroms zu Sync-Blöcken umformatiert, die für einen SD-VCR geeignet sind; und
eine Aufzeichnungs-Verarbeitungseinrichtung (58), die Kanalcodierung der von der Einrichtung (57) zum Formatieren des Sync-Blocks ausgegebenen Daten mit der Sync-Blockstruktur durchführt und das Ergebnis aufzeichnet;
wobei die Trickwiedergabedaten so erzeugt und aufgezeichnet werden, dass
die Trickwiedergabedaten verteilt in getrennten Bereichen (40, 42) innerhalb eines Videobereichs (Sync-Blöcke 21-155) jeder Spur eines ersten Spur-Paars (30) aufgezeichnet werden, wobei in dem Videobereich Daten für das Abspielen mit normaler Geschwindigkeit aufgezeichnet werden und ein Spur-Paar eine erste Spur mit einem ersten Azimuthwinkel sowie eine zweite Spur mit einem zweiten Azimuthwinkel, die an die erste Spur angrenzt, enthält; und
die gleichen Trickwiedergabedaten wie die in dem ersten Spur-Paar (30) aufgezeichneten in einer Anzahl N von Spur-Paaren aufgezeichnet werden, die aufeinanderfolgend angeordnet sind, wobei N eine Mehrfachgeschwindigkeitszahl der Trickwiedergabedaten in Bezug auf die normale Abspielgeschwindigkeit ist, und zwar mit dem gleichen Muster, so dass die Positionen, an denen Trickwiedergabedaten (a, b; A, F, B, E, C, D) aufgezeichnet werden, in jeder Spur der N Spur-Paare die gleichen sind, und so, dass die gleichen Trickwiedergabedaten an entsprechenden Positionen in jedem der N Spur-Paare aufgezeichnet werden;
wobei erste Trickwiedergabedaten, die einer ersten Mehrfachgeschwindigkeit entsprechen, und zweite Trickwiedergabedaten, die einer zweiten Mehrfachgeschwindigkeit entsprechen, in ersten (40) bzw. zweiten (42) der getrennten Bereiche in jeder Spur der N Spur-Paare aufgezeichnet werden.

9. Digitaler Videorekorder nach Anspruch 8, wobei die Einrichtung (54) zum Erzeugen von Trickwiedergabedaten die Trickwiedergabedaten unter Verwendung von In-Bild-Daten der MPEG-2-Videosequenz erzeugt, die in die Einrichtung zum Erzeugen der Trickwiedergabedaten eingegeben wird.

## Revendications

1. Procédé d'enregistrement sur bande vidéo numérique pour enregistrer des données à lecture spéciale générées à partir de données d'image DVB dans une piste vidéo SD-VCR ensemble avec des données à lecture normale, comportant les étapes consistant à :
enregistrer les données à lecture spéciale intercalées dans des régions séparées (40, 42) dans une région vidéo (blocs de synchronisation 21 à 155), dans laquelle sont enregistrées des données de régions vidéo pour une lecture à vitesse normale, de chaque piste d'une première paire de pistes (30), une paire de pistes incluant une première piste ayant un premier angle azimutal et une seconde piste ayant un second angle azimutal et étant adjacente à ladite première piste, et
enregistrer les mêmes données à lecture spéciale que celles enregistrées dans ladite première paire de pistes (30) dans un nombre N de paires de pistes placées successivement, N étant un nombre de vitesse multiple des données à lecture spéciale par rapport à ladite vitesse de lecture normale, ayant le même motif, de sorte que les emplacements dans lesquels sont enregistrées des données à lecture spéciale (a,b ; A,F, B,E, C,D) sont les mêmes dans chaque piste desdites N paires de pistes, et de sorte que les mêmes données à lecture spéciale sont enregistrées à des emplacements correspondants dans chacune desdites N paires de pistes,
dans lequel des premières données à lecture spéciale correspondant à une première vitesse multiple et des secondes données à lecture spéciale correspondant à une seconde vitesse multiple sont enregistrées dans des premières (40) et secondes (42) régions desdites régions séparées, respectivement, dans chaque piste desdites N paires de pistes.

2. Procédé d'enregistrement selon la revendication 1, dans lequel ladite première vitesse multiple et ladite seconde vitesse multiple sont des vitesses 5× et 15×, respectivement.

3. Procédé d'enregistrement selon la revendication 2, dans lequel lesdites données à lecture spéciale correspondant à la vitesse 5× sont enregistrées dans une zone centrale (40) de la région vidéo de chaque paire de pistes (30).

4. Procédé d'enregistrement selon la revendication 3, dans lequel lesdites données à lecture spéciale correspondant à la vitesse 5× sont enregistrées dans les 71ème à 100ème blocs de synchronisation le long de la direction de déplacement de la tête durant une lecture normale.

5. Procédé d'enregistrement selon la revendication 3 ou 4, dans lequel lesdites données à lecture spéciale correspondant à la vitesse 15× sont enregistrées dans trois autres régions séparées (42) en excluant la zone centrale (40) de la région vidéo de chaque paire de pistes (30).

6. Procédé d'enregistrement selon la revendication 5, dans lequel lesdites données à lecture spéciale correspondant à la vitesse 15× ont deux régions (42) situées dans la partie inférieure centrale et une région (42) située dans la région supérieure centrale, par rapport à la position de début de balayage par la tête, durant une lecture normale.

7. Procédé d'enregistrement selon la revendication 6, dans lequel lesdites données à lecture spéciale correspondant à la vitesse 15× sont enregistrées dans les 21ème à 25ème, 46ème à 50ème et 121ème à 125ème blocs de synchronisation (42) le long de la direction de balayage de la tête durant une lecture normale.

8. Magnétoscope numérique pour enregistrer des données DVB et un flot de transport MPEG-2, comportant :
un tampon (56) pour mettre en tampon les données DVB du flot de transport MPEG-2 et délivrer en sortie le résultat,
un extracteur d'en-tête de couche transport (51) pour recevoir les données DVB, diviser les données DVB reçues en un en-tête de couche transport et un flot vidéo MPEG-2, et délivrer en sortie le résultat,
un extracteur d'en-tête de couche vidéo MPEG-2 (52) pour recevoir le flot vidéo MPEG-2 délivré en sortie par ledit extracteur d'en-tête de couche transport (51), diviser l'entrée en un en-tête de couche vidéo MPEG-2 et une séquence vidéo MPEG-2, et délivrer en sortie le résultat,
des moyens de mémorisation d'informations secondaires (53) pour mettre en tampon l'en-tête de couche transport délivré en sortie par ledit extracteur d'en-tête de couche transport (51) et l'en-tête de couche vidéo MPEG-2 délivré en sortie par ledit extracteur d'en-tête de couche vidéo MPEG-2 (52), et délivrer en sortie le résultat,
un générateur de données à lecture spéciale (54) pour recevoir la séquence vidéo MPEG-2 délivrée en sortie par ledit extracteur d'en-tête de couche vidéo MPEG-2 (52) et générer des données à lecture spéciale,
un processeur d'en-tête (55) pour annexer des informations constituées de l'en-tête de couche transport et de l'en-tête de couche vidéo MPEG-2 aux données à lecture spéciale générées par ledit générateur de données à lecture spéciale (54) en référence à l'en-tête de couche transport et l'en-tête de couche vidéo MPEG-2 mémorisés dans lesdits moyens de mémorisation d'informations secondaires (53),
un dispositif de formatage de bloc de synchronisation (57) pour reformater les données à lecture spéciale auxquelles sont annexées les informations d'en-tête délivrées en sortie par ledit processeur d'en-tête (55), et les données DVB du flot de transport MPEG-2 délivrées en sortie par ledit tampon (56) en blocs de synchronisation appropriés pour un dispositif SD-VCR, et
un processeur d'enregistrement (58) pour effectuer un codage de canal des données ayant la structure de bloc de synchronisation délivrée en sortie par ledit dispositif de formatage de bloc de synchronisation (57) et enregistrer le résultat,
dans lequel les données à lecture spéciale sont générées et enregistrées de sorte que :
les données à lecture spéciale sont enregistrées en étant intercalées dans des régions séparées (40, 42) dans une région vidéo (blocs de synchronisation 21 à 155), dans laquelle sont enregistrées des données de régions vidéo pour une lecture à vitesse normale, de chaque piste d'une première paire de pistes (30), une paire de pistes incluant une première piste ayant un premier angle azimutal et une seconde piste ayant un second angle azimutal et étant adjacente à ladite première piste, et
les mêmes données à lecture spéciale que celles enregistrées dans ladite première paire de pistes (30) sont enregistrées dans un nombre N de paires de pistes placées successivement, N étant un nombre de vitesse multiple des données à lecture spéciale par rapport à ladite vitesse de lecture normale, ayant le même motif, de sorte que les emplacements dans lesquels sont enregistrées des données à lecture spéciale (a,b ; A,F, B,E, C,D) sont les mêmes dans chaque piste desdites N paires de pistes, et de sorte que les mêmes données à lecture spéciale sont enregistrées à des emplacements correspondants dans chacune desdites N paires de pistes,
dans lequel des premières données à lecture spéciale correspondant à une première vitesse multiple et des secondes données à lecture spéciale correspondant à une seconde vitesse multiple sont enregistrées dans des premières (40) et secondes (42) régions desdites régions séparées, respectivement, dans chaque piste desdites N paires de pistes.

9. Magnétoscope numérique selon la revendication 8, dans lequel ledit générateur de données à lecture spéciale (54) génère les données à lecture spéciale en utilisant des données intra-images de la séquence vidéo MPEG-2 délivrée en entrée audit générateur de données à lecture spéciale.
